# EUROPEAN PATENT SPECIFICATION

(11) **EP 4 010 163 B1**
(45) Date of publication and mention of the grant of the patent: **25.02.2026**
(21) Application number: 20760662.5
(22) Date of filing: 04.08.2020
(51) Int. Cl.: B29C 45/00, B29C 45/14, B29K 69/00, B29K 101/10, B29K 75/00, B29K 669/00, B29C 45/16

(54) **IN-MOLD COATING OF INSERTS BY INJECTION MOULDING**
BESCHICHTEN VON EINLEGETEILEN MITTELS SPRITZGIESSEN
AFFICHER D'INSERTS AVEC MOULAGE PAR INJECTION

(30) Priority: 07.08.2019 US 201962883876 P
(43) Date of publication of application: 15.06.2022
(73) Proprietor: Covestro LLC, Pittsburgh, PA 15205 (US)
(72) Inventor: MCCANNA, Jessee, Midland Pennsylvania 15059 (US); YEAGER, Mark A., McKees Rocks Pennsylvania 15136 (US)
(74) Representative: Levpat
(86) International application number: PCT/US2020/044829
(87) International publication number: WO 2021/026117

(56) References cited:
- WO-A1-2016/028568
- JP-A- H08 252 838

## Description

### FIELD

The present disclosure relates to process for in-mold encapsulation of multiple molded parts, and products formed therefrom.

### BACKGROUND

Two-component polyurethane forming compositions are widely used because of the many advantageous properties they can exhibit. These curable compositions generally comprise a liquid binder component and a liquid hardener/crosslinker component. The liquid binder component may comprise an isocyanate-reactive component, such as a polyol, and the liquid crosslinker component may comprise a polyisocyanate. The addition reaction of the polyisocyanate with the isocyanate-reactive component, which can occur at ambient conditions, produces crosslinked polyurethane networks that form coating films. Polyurethane coatings are used in a wide variety of applications, one of which is often referred to as "In-Mold" coating.

In an In-Mold coating application, a coating film is molded over the surface of a substrate. In an In-Mold coating method that utilizes a multi-cavity metal mold, the molded plastic part is formed in one cavity of the mold and the molded plastic part is introduced into a second cavity of the mold in which the coating film is injected. However, such a process does not surround or encapsulate the molded plastic part.

Coatings that are meant to surround or encapsulate a plastic part are applied by submerging the part in a liquid which later cures on the part as a solid coating. However, such a process requires considerably more coating materials than is actually applied on the part. Furthermore, the process may only be used with certain coatings that remain as liquid, but may solidify when the coating is removed from the submersion pool. For further details see for example documents JP H08 252838 A and WO 2016/028568 A1.

### SUMMARY

Disclosed herein is a process for in-mold coating, comprising introducing a first plastic molded part into a cavity of a mold; introducing a second plastic molded part into the cavity, wherein the first molded part and the second molded part fit together to form an assembly having an outside surface; introducing a coating composition into the cavity; and curing the coating on the outside surface of the assembly, wherein the coating flows in a gap located between the outside surface of the assembly and the cavity, and wherein the coating flows 360° around the outside surface of the assembly, such that when the coated assembly is rotated 360° about an axis, the coating may be seen as applied to a portion of the outside surface of the assembly at any degree about that axis.

Also disclosed herein is an encapsulation comprising: a first plastic molded part; a second plastic molded part, wherein the first molded part and the second molded part fit together to form an assembly having an outside surface; a cured coating located on the outside surface of the assembly, wherein the coating flows 360° around the outside surface of the assembly, such that when the coated assembly is rotated 360° about an axis, the coating may be seen as applied to a portion of the outside surface of the assembly at any degree about that axis, and wherein the encapsulation does not comprise any other adhesives or structures.

At least one of the first plastic molded part and the second plastic molded part comprises polycarbonate.

The coating composition comprises (i) a first polymeric component including a polymer comprising isocyanate-reactive group(s) and (ii) a second polymeric component including a polyisocyanate. Optionally, the first polymeric component is a polyether polyol or a polycarbonate polyol. Furthermore, the second polymeric component may be a diisocyanate. In another embodiment, the second polymeric component comprises polyisocyanurates. In still another embodiment, the second polymeric component comprises biuret groups.

In another embodiment not yet disclosed, the coating composition further comprises an internal mold release agent. In a different embodiment, the first plastic molded part and the second plastic molded part comprise one or more notches. In another, the outside surface of the assembly comprises one or more portions that are not coated and one or more other portions that are coated.

In a different embodiment, the first plastic molded part and the second plastic molded part are held together solely by the cured coating, and not by any other adhesives or structures.

### BRIEF DESCRIPTION OF THE DRAWINGS

The subject matter which is regarded as embodiments is particularly pointed out and distinctly claimed in the claims at the conclusion of the specification. The forgoing and other features, and advantages of the embodiments are apparent from the following detailed description taken in conjunction with the accompanying drawings in which:
FIG. 1 is a front view of a first molded part;
FIG. 2 is a rear view of the first molded part of FIG. 1;
FIG. 3 is a front view of a second molded part;
FIG. 4 is a rear view of the second molded part of FIG. 3;
FIG. 5 is a front view of an encapsulation of two molded parts;
FIG. 6 is a rear view of the encapsulation of FIG. 5;
FIG. 7 is a perspective view of a tool to create an encapsulation of two molded parts;
FIG. 8 is a perspective view of the tool shown in FIG. 7, with the cover removed; and
FIG. 9 is another perspective view from the opposite direction of FIG. 8, showing the tool of FIG. 7 with the cover removed.

### DETAILED DESCRIPTION

Various examples are described and illustrated herein to provide an overall understanding of the structure, function, operation, manufacture, and use of the disclosed products and processes. The various examples described and illustrated herein are non-limiting and non-exhaustive. Thus, the invention is not limited by the description of the various non-limiting and non-exhaustive examples disclosed herein. Rather, the invention is defined solely by the claims. The features and characteristics illustrated and/or described in connection with various examples may be combined with the features and characteristics of other examples. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112 and 35 U.S.C. § 132(a). The various embodiments disclosed and described in this specification can comprise, consist of, or consist essentially of the features and characteristics as variously described herein.

Any patent, publication, or other disclosure material identified herein is incorporated herein by reference in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout the specification to "various aspects," "some aspects," "one aspect," or "an aspect", similar language relating to "examples," and the like, means that a particular feature, structure, or characteristic described in connection with the example is included in at least one aspect. Thus, appearances of the phrases "in various aspects," "in some aspects," "in one aspect", or "in an aspect", similar language relating to "examples," and the like, in places throughout the specification are not necessarily all referring to the same aspect. Furthermore, the particular features, structures, or characteristics may be combined in any suitable manner in one or more aspects. Thus, the particular features, structures, or characteristics illustrated or described in connection with one example or aspect may be combined, in whole or in part, with the features structures, or characteristics of one or more other examples or aspects without limitation. Such modifications and variations are intended to be included within the scope of the present aspects.

In this specification, unless otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described herein should at least be construed in light of the number of reported significant digits and by applying ordinary rounding techniques.

As used herein, "polymer" encompasses prepolymers, oligomers and both homopolymers and copolymers; the prefix "poly" in this context referring to two or more. As used herein, "molecular weight", when used in reference to a polymer, refers to the number average molecular weight ("Mₙ"), unless otherwise specified. As used herein, the Mₙ of a polymer containing functional groups, such as a polyol, can be calculated from the functional group number, such as hydroxyl number, which is determined by end-group analysis, as is well known to those skilled in the art.

As used herein, the term "aliphatic" refers to organic compounds characterized by substituted or un-substituted straight, branched, and/or cyclic chain arrangements of constituent carbon atoms. Aliphatic compounds do not contain aromatic rings as part of the molecular structure thereof. As used herein, the term "cycloaliphatic" refers to organic compounds characterized by arrangement of carbon atoms in closed ring structures. Cycloaliphatic compounds do not contain aromatic rings as part of the molecular structure thereof. Therefore, cycloaliphatic compounds are a subset of aliphatic compounds. Therefore, the term "aliphatic" encompasses aliphatic compounds and/or cycloaliphatic compounds.

As used herein, "diisocyanate" refers to a compound containing two isocyanate groups. As used herein, "polyisocyanate" refers to a compound containing two or more isocyanate groups. Hence, diisocyanates are a subset of polyisocyanates.

As used herein, "encapsulation" means that a coating surrounds a part or multiple parts, as viewed as the part(s) is/are rotated 360° about at least one axis. However, an encapsulation may include areas that are not coated, provided that the coating outside of such areas is connected to and still reaches areas when viewed about one axis.

An encapsulation of multiple molded parts, comprises two or more molded parts, and a coating that is molded over the surface of the molded parts. While an embodiment is described herein having two molded parts, it is understood that such parts are made to fit together to form an assembly, and the assembly may comprise more than two parts that are made to fit together, including assemblies made up of three, four, five, six, seven or eight parts.

The molded parts may be formed, for example, by injection molding, injection compression molding, compression molding, reaction injection molding (RIM), and/or foaming. Thermoplastic and thermosetting plastics may be employed as materials, specific examples of which include, but are not limited to, polycarbonate (PC), polyester, such as polybutyleneterephthalate (PBT) or polyethyleneterephthalate (PET), polyamide (PA), polyethylene (PE), polypropylene (PP), polystyrene (PS), poly(acrylonitrile-co-butadiene-co-styrene) (ABS), poly(acrylonitrile-co-styrene-co-acrylicester) (ASA), poly(styrene-acrylonitrile) (SAN), polyoximethylene (POM), cyclic polyolefine (COC), polyphenylenoxide (PPO), polymethylmethacrylat (PMMA), polyphenylensulfide (PPS), polyurethane (PUR), epoxy resins (EP), polyvinylchloride (PVC) and blends thereof. The molded part may be of any desired shape that the equipment can accommodate.

The forming of the molded part can be carried out by an injection molding process utilizing a thermoplastic. Suitable thermoplastics include, but are not limited to, polycarbonate (PC), polybutylene terephthalate (PBT), polyamide (PA), polyethylene (PE), polypropylene (PP), polystyrene (PS), poly(acrylonitrile-co-butadiene-co-styrene) (ABS), poly(acrylonitrile-co-styrene-co-acrylicester) (ASA), poly(styrene-acrylonitrile) (SAN), polyethyleneterephthalate (PET), polyoximethylene (POM), cyclic polyolefine (COC), polyphenylenoxide/polyamide(PPO/PA) or polyphenylenoxide/polystyrene PPO/PS blends, poly(methyl methacrylate) (PMMA), polyphenylensulfide (PPS), thermoplastic polyurethane (TPU), epoxy resins (EP), polyvinylchloride (PVC) and blends thereof. In certain aspects, the thermoplastic comprises a PC/ABS blend, such as BAYBLEND T85 SG, from Covestro AG.

In an aspect, the multiple parts fit together by use of notched openings or the like, to lessen the risk of the parts sliding out of place before encapsulation. In another aspect, there is no adhesive or other material applied to the surfaces where the parts come into contact. In this embodiment, the coating surrounding the multiple parts is the only material binding the parts together.

According to certain aspects, after forming the multiple molded parts, the parts can be introduced into a second cavity of the same mold by opening the mold and transferring the substrate into a coating mold cavity. The transfer of the parts may be carried out by any of a variety of methods. Examples of suitable methods include, but are not limited to, transfer with a rotary table, turning plate, sliding cavity and index plate as well as comparable methods in which the substrate remains on the core of a mold. In examples where the substrate remains on the core for the transfer, as a further benefit, the substrate position may also be accurately defined after the transfer. In certain aspects, the substrate is removed from one cavity, e.g., with the aid of a handling system, and laid into another cavity.

A curable composition is introduced into the coating mold cavity containing the substrate in order to coat a surface of the substrate. The curable compositions comprise: (i) a first polymeric component including a polymer comprising isocyanate-reactive group(s); and (ii) a second polymeric component including a polyisocyanate. In certain aspects, the curable composition may be a high solids composition. As used herein, "high solids composition" means that the curable composition comprises no more than 15 percent by weight volatile materials, such as, organic solvents, water, etc., based on the total weight of the curable composition. In certain aspects, the curable comprises not more than 10 percent by weight volatile materials such as, for example, not more than 2 percent by weight of volatile materials or not more than 1 percent by weight of volatile materials. In certain aspects, the curable composition may be a 100 percent solids composition that has a relatively low viscosity. As used herein, "relatively low viscosity" means a viscosity of no more than 12,000 mPa·s at 23°C when measured according to DIN EN ISO 3219/A3 or 12,000 cps at 72°F when measured according to ASTM D5125, determined using a rotational viscometer - VISCO TESTER 550, Thermo Haake GmbH and a hydroxyl content of 15.4-16.6 percent (measured according to DIN 53 240/2 or ASTM 7253.

Suitable polymers comprising isocyanate-reactive groups include, for example, polymeric polyols, such as, polyether polyols, polyester polyols, and/or polycarbonate polyols, among others.

Suitable polyether polyols include, for example, those having a Mₙ of 100 to 4,000 g/mol. Polyether polyols which are formed from recurring ethylene oxide and propylene oxide units are sometimes used, such as those having a content of from 35 to 100 percent of propylene oxide units, such as 50 to 100 percent of propylene oxide units. These can be random copolymers, gradient copolymers or alternating or block copolymers of ethylene oxide and propylene oxide. Suitable polyether polyols derived from recurring propylene oxide and/or ethylene oxide units are commercially available and include, for example, those available from, for example, Covestro LLC, Pittsburgh, Pennsylvania (such as e.g. DESMOPHEN 3600Z, DESMOPHEN 1900U, ACCLAIM Polyol 2200, ACCLAIM Polyol 40001, ARCOL Polyol 1004, ARCOL Polyol 1010, ARCOL Polyol 1030, ARCOL Polyol 1070, BAYCOLL BD 1110, BAYFILL VPPU 0789, BAYGAL K55, PET1004, POLYETHER S180).

In certain aspects, the polymeric polyol comprises a polyester polyol, such as those having a Mₙ of 200 to 4,500 g/mol. In certain aspects, the polyester polyol has a viscosity of 700 to 50,000 mPa·s at 23°C and a hydroxyl number of 200 to 800 mg KOH/g. In certain aspects, the polyester polyol may be based on an aromatic carboxylic polyester with an average hydroxyl functionality of greater than 2, such as 3 or more, and an average hydroxyl number of 350 to 700 mg KOH/g, such as 450 to 600 mg/KOH/g and a viscosity of 1000 to 30000 mPa·s at 23°C. Suitable polyester polyols can be prepared, as will be appreciated, by reacting polyhydric alcohols with stoichiometric amounts of polybasic carboxylic acids, carboxylic anhydrides, lactones or polycarboxylic acid esters of C₁-C₄ alcohols.

The polyester polyol may be derived from one or more of aromatic polybasic carboxylic acids or their anhydride, ester derivatives, ε-caprolactone, optionally in a mixture with one or more aliphatic or cycloaliphatic polybasic carboxylic acids or their derivatives.

In certain aspects, the polymeric polyol comprises an aliphatic polycarbonate polyol, such as a polycarbonate diol, such as those having a Mₙ of 200 to 5000 gram/mole, such as 150 to 4,500 gram/mole, 300 to 2000 gram/mole, 300 to 2,500 gram/mole or 400 to 1000 gram/mole, and a hydroxyl functionality of 1.5 to 5, such as 1.7 to 3 or 1.9 to 2.5. Such polycarbonate polyols can, in certain aspects, also have a viscosity of 2000 to 30,000 mPa·s at 23°C, such as 2500 to 16000 mPa·s or 3000 to 5000 mPa·s, when measured according to DIN EN ISO 3219/A3 determined using a rotational viscometer - VISCO TESTER 550, Thermo Haake GmbH, a hydroxyl content of 15.4-16.6 percent (measured according to DIN 53 240/2), and/or a hydroxyl number of 40 to 300 mg KOH/gram, such as 50 to 200 mg KOH/gram or 100 to 200 mg KOH/gram, when measured by end-group analysis as is well understood in the art.

The polymer comprising isocyanate-reactive groups may comprise (i) a polyester polyol, such as a branched polyester polyol, and (ii) a polycarbonate polyol, such as a polycarbonate diol, such as a polycarbonate polyester diol, such as those based on 1,6-hexanediol and ε-caprolactone. In certain aspects, the weight ratio of (i) and (ii) in the curable compositions may be in the range of 1:10 to 10:1, such as 1:5 to 5:1, 1:4 to 4:1, 1:3 to 3:1, 1:2 to 2:1, or, in some cases, it is 1:1. In certain aspects, the polymer comprising isocyanate-reactive groups (or mixture of two or more such polymers as described above) is selected so as to have a relatively low viscosity at 23°C (measured according to DIN EN ISO 3219/A.3), such as no more than 10,000 mPa·s, or, in some cases, no more than 9,000 mPa·s or no more than 8,000 mPa·s.

In certain examples, the curable compositions may further comprise a polyisocyanate. Suitable polyisocyanates include aromatic, araliphatic, aliphatic or cycloaliphatic di- and/or polyisocyanates and mixtures thereof. In certain aspects, the polyisocyanate may comprise a diisocyanates of the formula

R(NCO)₂,

wherein R represents an aliphatic hydrocarbon residue having 4 to 12 carbon atoms, a cycloaliphatic hydrocarbon residue having 6 to 15 carbon atoms, an aromatic hydrocarbon residue having 6 to 15 carbon atoms or an araliphatic hydrocarbon residue having 7 to 15 carbon atoms. Specific examples of suitable diisocyanates include, for example, xylylene diisocyanate, tetramethylene diisocyanate, 1,4-diisocyantobutane, 1,12-diisocyanatododecane, hexamethylene diisocyanate, 2,3,3-trimethylhexamethylene diisocyanate, 1,4-cyclohexylene diisocyanate, 4,4'-dicyclohexylmethane diisocyanate, 4,4'-dicyclohexyl diisocyanate, 1-diisocyanato-3,3,5-trimethyl-5-isocyanatomethylcyclohexan- e (isophorone diisocyanate), 1,4-phenylene diisocyanate, 2,6-tolylene diisocyanate, 2,4-tolylene diisocyanate, 1,5-naphthylene diisocyanate, 2,4'- or 4,4'-diphenylmethane diisocyanate, 4,4'-diphenyldimethylmethane diisocyanate, α,α,α',α'-tetramethyl-m- or -p-xylylene diisocyanate, and triphenylmethane 4,4',4"-triisocyanate as well as mixtures thereof. Also suitable are monomeric triisocyanates such as 4-isocyanatomethyl-1,8-octamethylene diisocyanate.

Polyisocyanate adducts containing isocyanurate, iminooxadiazine dione, urethane, biuret, allophanate, uretdione and/or carbodiimide groups are also suitable for use in the curable compositions of the present disclosure . Such polyisocyanates may have isocyanate functionalities of 3 or more and can be prepared, for example, by the trimerization or oligomerization of diisocyanates or by the reaction of diisocyanates with polyfunctional compounds containing hydroxyl or amine groups. The polyisocyanate may be, for example, hexamethylene diisocyanate.

In certain examples, the curable composition may comprise a low viscosity polyisocyanate having a viscosity at 23°C and at 100 percent solids of less than 2000 mPa·s, such as less than 1500 mPa·s and , in some cases, 800 to 1400 mPa·s, when measured according to DIN EN ISO 3219/A3 determined using a rotational viscometer - VISCO TESTER 550, Thermo Haake GmbH; an isocyanate group content of 8.0 to 27.0 percent by weight, such as 14.0-24.0 percent by weight or 22.5-23.5 percent by weight (according to DIN EN ISO 11909); an NCO calculated functionality of 2.0 to 6.0, such as 2.3 to 5.0 or 2.8 to 3.2; and a content of monomeric diisocyanate of less than 1 percent by weight, such as less than 0.5 percent by weight.

Examples of these polyisocyanates include isocyanurate group-containing polyisocyanates. Cyclic and/or linear polyisocyanate molecules may be employed. For improved weathering and diminished yellowing the polyisocyanate(s) of the isocyanate component may be aliphatic.

In certain aspects, the polyisocyanate comprises, or, in some aspects, may consist essentially of, or may consist of, a polyisocyanate containing biuret groups, such as the biuret adduct of hexamethylene diisocyanate (HDI) available from Covestro AG under the trade designation DESMODUR N-100, a polyisocyanate containing isocyanurate groups, such as that available from Covestro AG under trade designation DESMODUR N-3300, and/or a polyisocyanate containing urethane groups, uretdione groups, carbodiimide groups, allophanate groups, and the like.

The pre-reaction of the polyisocyanate with hydroxy group-containing material may result in the modified polyisocyanate having a higher molecular weight and lower isocyanate content than the polyisocyanate alone. This can often lead to a higher viscosity in the modified polyisocyanate. It is often desirable that the modified polyisocyanate is low in viscosity, such as those in which the Brookfield viscosity is less than about 10,000 cps, such as less than 5,000 cps, or, in some cases, less than 4,000 cps at temperatures ranging from 25°C to 70°C. Exemplary polyisocyanates include those commercially available from Covestro AG under the tradename DESMODUR N-3600, which has a viscosity of 800-1400 mPa·s at 25°C.

In certain aspects, in forming the curable composition, the polymer(s) comprising isocyanate-reactive groups, such as the polyol(s) mentioned herein and the polyisocyanate(s) may be combined in relative amounts such that the curable composition has a ratio of isocyanate groups to isocyanate-reactive groups of 0.8 to 3.0:1, such as 0.8 to 2.0:1, and, in some aspects, 1 to 1.8:1 or 1 to 1.5:1. In certain aspects, this ratio may be greater than 1.2:1, such as at least 1.3:1 and/or up to 1.4:1.

The curable compositions used may comprise a catalyst for the reaction between the isocyanate-reactive group, such as the hydroxyl group, and the isocyanate group. Suitable catalysts include metallic and nonmetallic catalysts, such as, but are not limited to, amine catalysts, such as 1,8-diazabicyclo[5.4.0]undec-7-ene (DBU), 1,4-diazabicyclo[2.2.2]octane (DABCO) or triethanolamine, and Lewis acid compounds, such as dibutyltin dilaurate, lead octoate, tin octoate, titanium and zirconium complexes, cadmium compounds, bismuth compounds, such as bismuth neodecanoate and iron compounds. In certain aspects, the catalyst may be present in the curable composition in an amount of no more than 1.0 percent by weight, based on the total solids contents of the curable composition.

In certain examples, the curable compositions may comprise an internal mold release agent, such as silicone, thereby facilitating the release of the cured coating from the coating mold cavity.

When present, the internal mold release agent may be included in the curable composition in an amount of 0.1 to 5 percent by weight, and in certain examples, may be present in an amount of 0.1 to 1.0 percent by weight, based on the total weight of the curable composition. In certain aspects, the internal mold release agent may be present in the curable composition in an amount sufficient to provide a cured coating with a surface tension of no more than 30 dynes/cm, such as no more than 25 dynes/cm, when measured using a Ramé-Hart goniometer in which total solid surface energies, including the polar and dispersive components are calculated using the advancing angles according to the Owens Wendt procedure and in which samples are stacked together without surface protection and the surfaces are lightly brushed to remove dust prior to analysis.

The curable compositions may further comprise, for example, any customary auxiliaries and additives of paint technology, such as defoamers, thickeners, pigments, dispersing assistants, catalysts, anti-skinning agents, anti-settling agents, and/or emulsifiers.

In certain aspects, the step of coating the substrate may be carried out under elevated pressure, such as greater than 500 pounds per square inch gauge (psi), in certain examples at least 1000 psi, and in other examples at least 1600 psi. In certain examples the elevated pressure may be between1500 psi to 3000 psi, and in certain other examples between 1600 psi to 2800 psi.

A tool having a mold cavity is described herein, where two or more molded parts are placed inside the mold cavity. To create the encapsulation, a coating is applied around the two or more molded parts, after the parts are placed inside the cavity. The coating may be applied by injecting the curable composition at elevated pressure into the gap between the surface of the molded parts and the inner wall of the coating mold cavity. The pressure may be elevated by any means that provides a suitable level for the coating mold cavity. For example, the coating mold cavity may be pressurized via an external pressure device, such as clamps (as described in more detail below), to be filled before the end of the pot life of the curable composition is reached. The pressure may also aid in preventing the formation of bubbles at a flow front of the curable composition.

Injection of the curable composition into the coating mold cavity can be accomplished via one or more injection points such that the gap between the surface of the molded parts and inner wall of the coating mold cavity is filled with the curable composition. For an optimum injection of the curable composition, the position of the injection point can be chosen appropriately in a manner known to the person skilled in the art. In certain aspects, the gap is sized such that following injection into the gap and curing of the curable composition, the dry coating thickness of the cured curable composition is between 50 microns to 4000 microns, in certain examples between 1000 and 2000 microns.

The coating mold cavity may be designed to provide a controlled displacement of the air present in the coating mold cavity and removal of the air via a parting line or venting channels during the injection. Known calculation programs may be used to provide the controlled air displacement, such as, for example Moldflow from Autodesk Inc. In certain aspects, the mixture is injected into the coating mold cavity at a flow rate of 2-40 grams/second, a line pressure of 500 to 3000 psi (34-206 bar) and a temperature of 120-200°F (49-52°C) depending on viscosity (a higher viscosity mixture requires higher temperature). In certain examples, the mixture is injected into the coating mold cavity at a flow rate of less than 8 grams/second.

The coating may be carried out by the RIM process with a single cavity or with multiple cavities. The RIM process can have an advantage that the components of the curable composition are combined only immediately before injection into the coating mold cavity or cavities. In certain aspects, this is accomplished by feeding a first polymeric component comprising an isocyanate-reactive resin (as described herein) and a second polymeric component comprising a polyisocyanate (as described herein) from a RIM installation into an impingement mixing head, hereinafter referred to as a mixhead, where the polymeric components are mixed before injection into the coating mold cavity. Within the mixhead, the components of the curable composition are impinged together at an elevated pressure to induce mixing. In certain aspects, the elevated pressure is at least 500 psi such as at least 1000 psi, and in other examples at least 1600 psi. For example, the elevated pressure may be between, for example, 1500 psi to 3000 psi, and in other examples between 1600 psi to 2800 psi. Typically, to achieve such pressures, each of the components is fed to the mixhead through a small diameter orifice having a diameter of, for example, 0.1 mm to 1.0 mm.

The components of the curable composition may be mixed by an elevated pressure counter-current mixing head, a static mixer, or an active mixer. After mixing, the curable composition can enter a channel within the mold (e.g., a runner, a sprue, etc.) which directs the flow of the curable composition into the coating mold cavity. The filling of the coating mold cavity creates a back pressure due to the resistance of the curable composition entering the coating mold cavity and displacing the air. The back pressure may be affected by a length the curable composition has to travel from the injection point to the furthest point in the mold from the gate and a cross-sectional area along the length. Decreasing the cross-sectional area (e.g., decreasing coating thickness) while maintaining the same travel length creates a higher back pressure as the curable composition is more resistant to flow through the smaller cross-sectional area.

As the curable composition begins to cure into a cured coating on the surface of the molded parts, the viscosity of the curable composition may increase and thus, the back pressure increases as the coating is more resistant to flow.

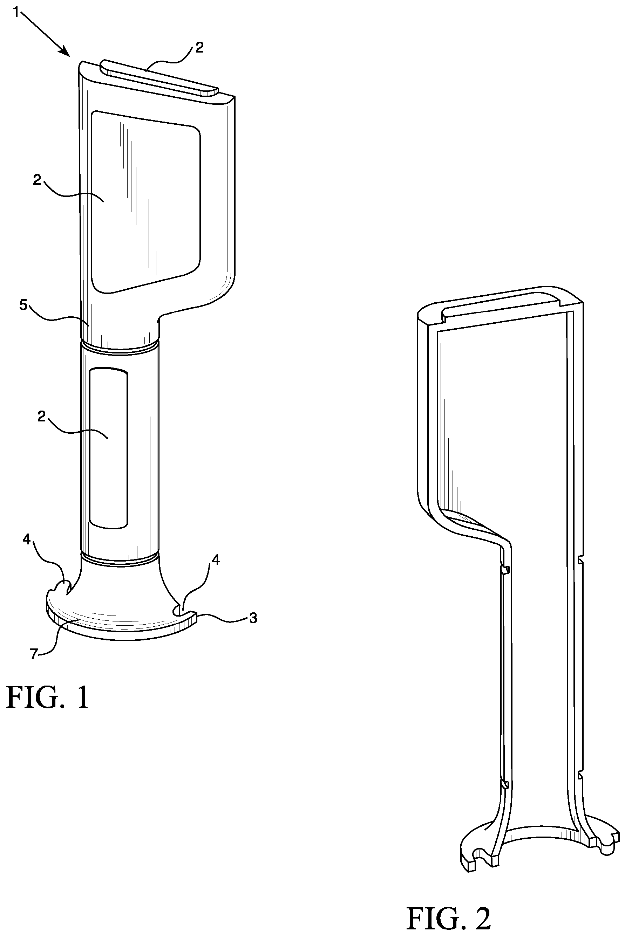

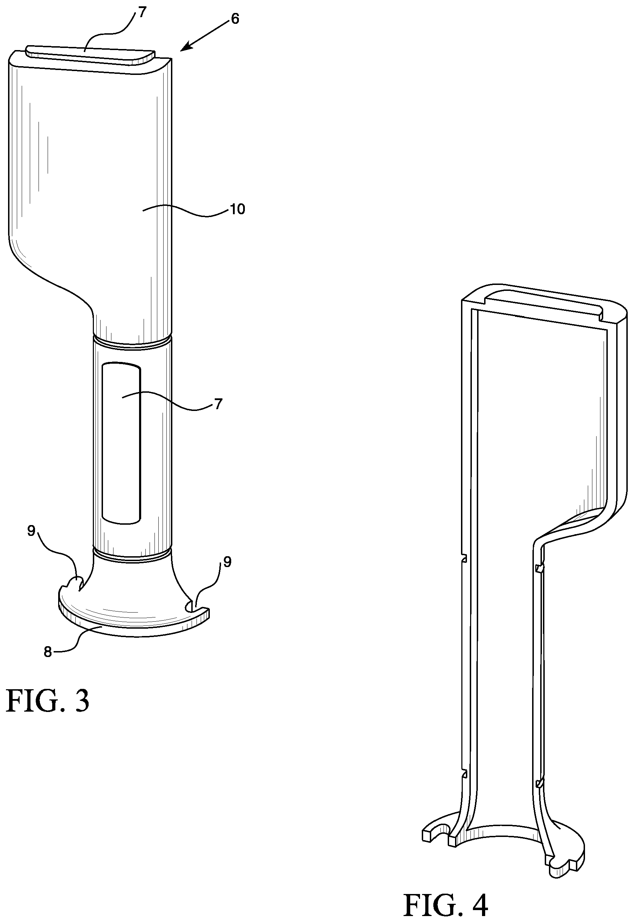

FIG. 1 shows a front view of first molded part 1, having raised elements 2, support base 3, notched elements 4 and surface 5. FIG. 2 shows a rear view of first molded part 1. FIG. 3 shows a front view of second molded part 6, having raised elements 7, support base 8, notched elements 9 and surface 10. FIG. 4 shows a rear view of second molded part 6. The notched elements make it easier to see where the parts fit together, and also may prevent sliding of the parts when they are fitted together before encapsulation.

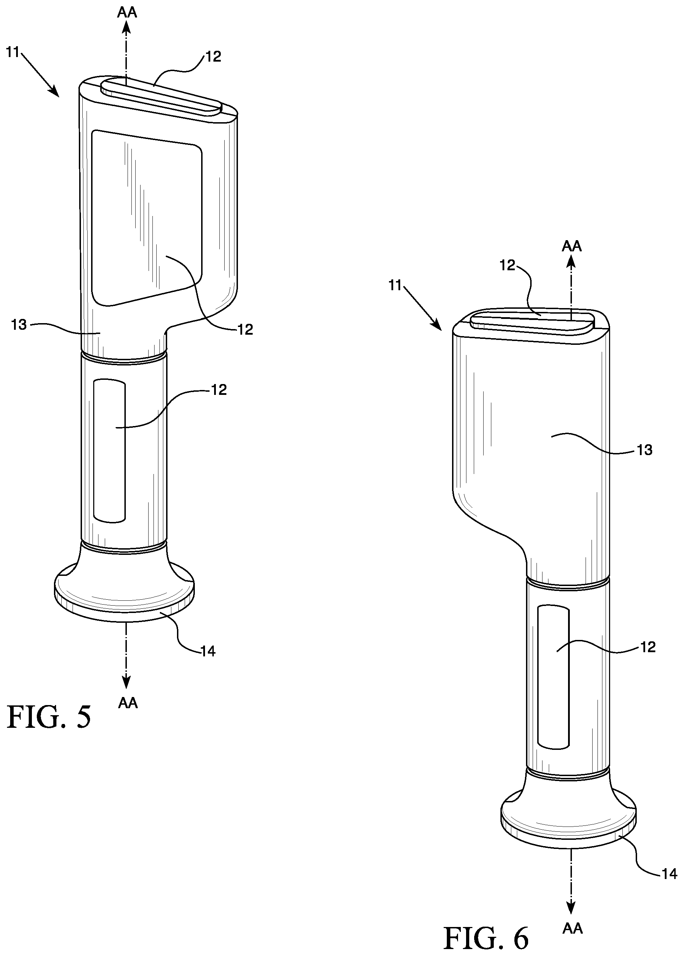

FIG. 5 shows a front view of encapsulation 11, having raised elements 12, coated surface 13 and support base 14. FIG. 6 shows a rear view of encapsulation 11 of FIG. 5. Raised elements 12 and support base 14 are not coated. As shown in FIGS. 5 and 6, the surface of the encapsulation is coated in a manner that surrounds the molded plastic parts. Encapsulation 11 may be rotated about axis AA, and one can see at each degree that the molded parts are coated at at least a portion of the surface during a complete rotation. Notably, it is not necessary for all portions to be coated, rather the coating surrounds at least a portion at all angles about one axis. In this manner, the coating wraps continuously around the entire plastic part assembly to provide strength to the encapsulation.

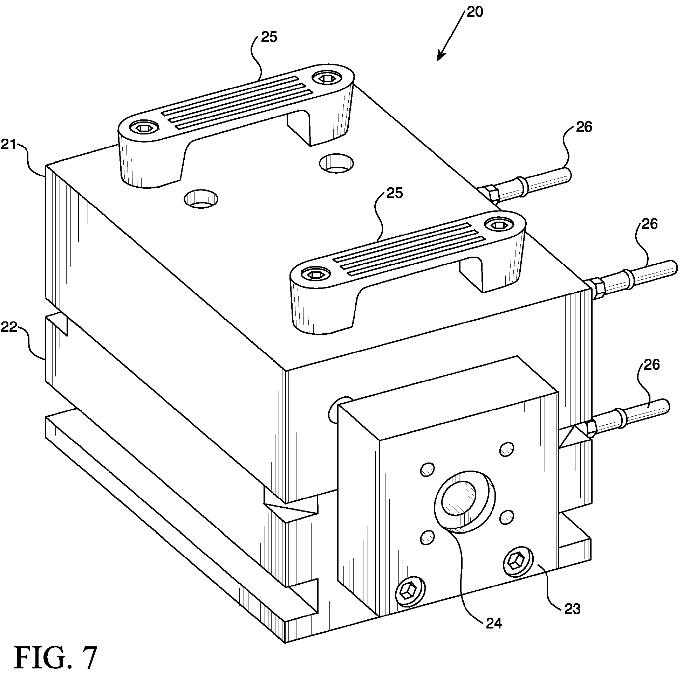

FIG. 7 is a perspective view of encapsulation tool 20 to create an encapsulation of two molded parts. Encapsulation tool 20 comprises cover 21 and base 22. The components of the coating enter tool 20 through opening 24. Adapter 23 may be used, to which a mixhead (not shown) may be attached for mixing the components of the coating prior to entering opening 24. Tool 20 further comprises handles 25 that may be used to remove cover 21. Also shown are water line attachments 26, which may be used to heat tool 20. While the attachments are referred to as water line attachments, other heating fluids may be used instead of water.

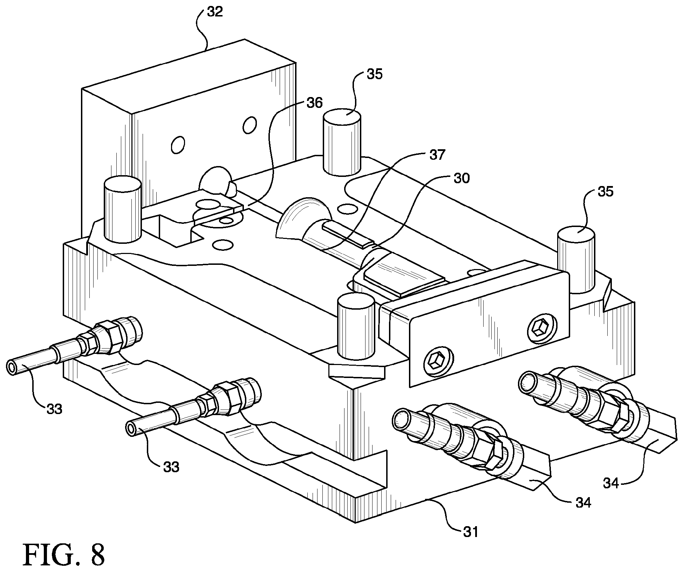

FIG. 8 is a perspective view of base 31 of an encapsulation tool. Molded parts 30 has been placed inside coating mold cavity 37. There is a gap (not shown) between molded parts 30 and coating mold cavity 37, into which the coating composition flows. As noted above, molded parts 30 may include raised elements. Such elements may be raised to a level such that those portions will not be coated during encapsulation. Adapter 32 is shown, to which a mixhead (not shown) may be attached for mixing the components of the coating prior to entering channel 36. Also shown are water line attachments 33 and 34, which are used to heat base 31. Support pegs 35 are also shown, which are used to ensure proper placement of the cover.

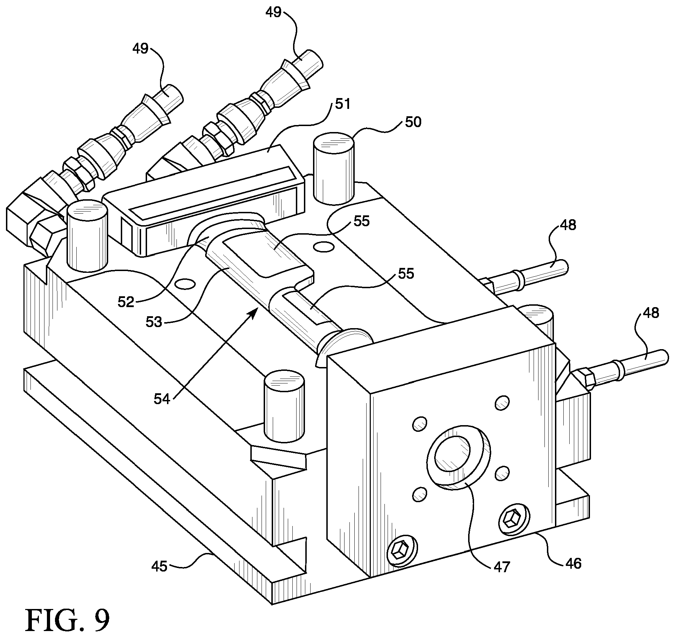

FIG. 9 is perspective view from the opposite direction from FIG. 8. Base 45 of an encapsulation tool is shown. Molded parts 54 has been placed inside the coating mold cavity. Mold suspension insert 51 and connector 52 hold molded parts 54 in place during encapsulation, where a coating is applied to coated surface 53 of molded parts 54. In an embodiment, coated surface 53 may create a seal around a portion of molded parts 54, leaving room for uncoated surfaces 55 which are not coated, while in other embodiments the coating may flow around molded parts 54 to create an encapsulation without any uncoated surfaces (not shown). Uncoated surfaces 55 may be raised, such that the coating materials when injected into the mold will go around such surfaces rather than coat them. In other embodiments, uncoated surfaces may not be raised, rather the mold cavity surface may be raised in those areas to touch the uncoated surfaces, so the liquid coating materials will likewise go around them.

Adapter **46** is shown, to which a mixhead (not shown) may be attached for mixing the components of the coating prior to entering opening 47. Also shown are water line attachments 48 and 49, which are used to heat base 45. Support pegs **50** are also shown, which are used to ensure proper placement of the cover.

In this manner, molded parts may be encapsulated without the use of any silicone or other material to adhere the two or more parts together. There is likewise no external support structures used to keep the parts together. Rather, the parts are held together solely by the coating that forms the encapsulation.

In certain aspects, an external release agent is present on the surface of one or both of the substrate and coating mold cavities. In certain aspects, a coating comprising, for example, electroless nickel and polytetrafluoroethylene (PTFE) may be used as an external release agent. Such a coating is commercially available under the tradename POLY-OND from Poly-Plating, Inc.

The coating mold cavity may be supplied with the curable composition at elevated pressure to form a curable coating on the substrate. The curable coating can be exposed to cure conditions of elevated temperature and external mold pressure (e.g., which maintains the elevated pressure within the coating mold cavity) to cure the curable coating. Suitable cure conditions include a mold temperature, for example, from 62°C to 105°C, and in some examples may be 75°C to 105°C. In certain aspects, the cure time, e.g., reaction time, is at least 10 seconds, and in some examples may be 10 to 90 seconds. In certain aspects, the cure time may be at least 70 seconds, and in other examples may be 70 to 120 seconds. In certain aspects, the cure time may be no more than 5 minutes. In another aspect, the cure time can be optimized to match the cure time of a molded plastic substrate. In certain aspects, prior to opening the mold or responsive to opening the mold, the pressure in the coating mold cavity may decrease to ambient pressure (e.g., 1 atmosphere) from the elevated pressure.

As used herein, "external mold pressure" means the externally applied pressure applied against the opposing faces of the mold (in which the coating mold cavity is disposed) when the opposing faces of the mold are forced together. The source of such pressure can be clamps, rams, or another device. The tonnage of the external mold pressure should be sufficient to prevent coating flash. The external mold pressure, in certain aspects, is maintained relatively constant through the coating cure process.

The In-Mold process may also be carried out in a mold having more than the two cavities. The cavities can be used to apply multiple coatings in succession. For example, a first coating may be applied in a first cavity, a second coating may be applied in second cavity, etc. until the desired number of coatings are applied. In certain aspects, one applied coating can have specific properties different from one or more other coatings. In another aspect, several molded plastic substrates can be produced in parallel, each in one first cavity and then each coated in parallel in one second cavity.

Properly configuring a mold with the features described above (e.g., the secondary mixer, dump well, and/or multiple channels), can provide a substantially mixed curable composition to coat a substrate with curable coating such that when the coating mold cavity is opened, the cured coating is substantially free of a cosmetic and/or tacky defect and, in certain aspects, has a dry coating thickness of 50 microns to 200 microns and in some examples is 80 microns to 100 microns.

An injection molding device can aid production of the substrate from a thermoplastic or thermosetting plastic utilizing a injection molding process. Suitable injection molding devices are known to the person skilled in the art. They include a standard injection molding machine construction comprising a plasticating unit (e.g., a heater, a screw, etc.) for processing of the plastic and a closing unit (e.g., clamping unit), which is responsible for the travelling, opening and closing movement of a substrate mold.

A coating injection device can aid in the production of the coating on the substrate. The coating injection device can be connected to the channel in order to fill the coating mold cavity with curable composition and coat the substrate. Suitable coating injection devices can include one or more reservoir containers for the polymeric components, stirrers, feed pumps, temperature control devices, feed lines and a mixing device(e.g. a mixhead).

An advantage of the present invention is that an encapsulation uses less coating materials and other adhering materials than used previously. Not only is there no silicone or other adhesives or structures holding the parts and encapsulation together, but also the process described above applies a coating only to those areas that are chosen, to create the encapsulation. There is a minimal waste of materials in comparison to other processes, such as coating by submersion. Also, the used of raised or uncoated surfaces allows for even less coating materials to be used in making an encapsulation.

The encapsulations described herein may be used to form various industrial and commercial products and are suitable, for example, to form tamper-resistant seals for materials that may be stored inside of the molded parts. Further applications include automobile interior components, such as e.g. pillar lining, trim, glove compartment covers, coverings, light shades, instrument panels, components of the air delivery system. In addition, encapsulations may be employed for industrially produced components of plastic, such as, for example, housings of electrical equipment, computer devices, mobile telephones, medical devices, and household articles.

## Claims

1. A process for in-mold coating, comprising:
introducing a first plastic molded part (1) into a cavity (37) of a mold;
introducing a second plastic molded part (6) into the cavity (37), wherein the first molded part (1) and the second molded part (6) fit together to form an assembly having an outside surface;
introducing a coating composition into the cavity (37); and
curing the coating on the outside surface of the assembly,
wherein the coating flows in a gap located between the outside surface of the assembly and the cavity (37), wherein the coating composition comprises (i) a first polymeric component including a polymer comprising isocyanate-reactive group(s) and (ii) a second polymeric component including a polyisocyanate, wherein at least one of the first plastic molded part (1) and the second plastic molded part (6) comprises polycarbonate and
wherein the coating flows 360° around the outside surface of the assembly, such that when the coated assembly is rotated 360° about an axis, the coating may be seen as applied to a portion of the outside surface of the assembly at any degree about that axis.

2. The process according to claim 1, wherein the first polymeric component is a polyether polyol or a polycarbonate polyol.

3. The process according to claim 1, wherein the second polymeric component comprises one selected from the group consisting of a diisocyanate, polyisocyanurates and biuret groups.

4. The process according to claim 1, wherein the coating composition further comprises an internal mold release agent.

5. The process according to claim 1, wherein the first plastic molded part (1) and the second plastic molded part (6) comprise one or more notches (4, 9).

6. The process according to claim 1, wherein the outside surface of the assembly comprises one or more portions that are not coated and one or more other portions that are coated.

7. The process according to claim 1, wherein the first plastic molded part (1) and the second plastic molded part (6) are held together solely by the cured coating, and not by any other adhesives or structures.

8. An encapsulation comprising:
a first plastic molded part (1);
a second plastic molded part (6), wherein the first molded part (1) and the second molded part (6) fit together to form an assembly having an outside surface;
a cured coating located on the outside surface of the assembly,
wherein the coating flows 360° around the outside surface of the assembly, such that when the coated assembly is rotated 360° about an axis, the coating may be seen as applied to a portion of the outside surface of the assembly at any degree about that axis, wherein the coating composition comprises (i) a first polymeric component including a polymer comprising isocyanate-reactive group(s) and (ii) a second polymeric component including a polyisocyanate, wherein at least one of the first plastic molded part (1) and the second plastic molded part (6) comprises polycarbonate and wherein the encapsulation does not comprise any other adhesives or structures.

9. The encapsulation of claim 8, wherein the first polymeric component is a polyether polyol or a polycarbonate polyol.

10. The encapsulation of claim 8, wherein the second polymeric component comprises one selected from the group consisting of a diisocyanate, polyisocyanurates and biuret groups.

11. The encapsulation of claim 8, wherein the coating composition further comprises an internal mold release agent.

12. The encapsulation of claim 8, wherein the first plastic molded part (1) and the second plastic molded part (6) comprise one or more notches (4, 9).

13. The encapsulation of claim 8, wherein the outside surface of the assembly comprises one or more portions that are not coated and one or more other portions that are coated.

## Patentansprüche

1. Verfahren zur In-Mold-Beschichtung, umfassend:
Einführen eines ersten Kunststoffformteils (1) in einen Hohlraum (37) eines Formwerkzeugs;
Einführen eines zweiten Kunststoffformteils (6) in den Hohlraum (37), wobei das erste Formteil (1) und das zweite Formteil (6) zusammenpassen, um eine Baugruppe mit einer Außenfläche zu bilden;
Einführen einer Beschichtungszusammensetzung in den Hohlraum (37); und
Härten der Beschichtung auf der Außenfläche der Baugruppe,
wobei die Beschichtung in einem Spalt fließt, der zwischen der Außenfläche der Baugruppe und dem Hohlraum (37) angeordnet ist, wobei die Beschichtungszusammensetzung umfasst: (i) eine erste Polymerkomponente, die ein Polymer enthält, das isocyanatreaktive Gruppe(n) umfasst, und (ii) eine zweite Polymerkomponente, die ein Polyisocyanat enthält, wobei wenigstens eines von dem ersten Kunststoffformteil (1) und dem zweiten Kunststoffformteil (6) Polycarbonat umfasst und
wobei die Beschichtung 360° um die Außenfläche der Baugruppe fließt, so dass, wenn die beschichtete Baugruppe 360° um eine Achse gedreht wird, die Beschichtung bei jedem Grad um die Achse als auf einen Abschnitt der Außenfläche der Baugruppe aufgebracht gesehen werden kann.

2. Verfahren nach Anspruch 1, wobei die erste Polymerkomponente ein Polyetherpolyol oder ein Polycarbonatpolyol ist.

3. Verfahren nach Anspruch 1, wobei die zweite Polymerkomponente eine ausgewählt aus der Gruppe bestehend aus einem Diisocyanat, Polyisocyanuraten und Biuretgruppen umfasst.

4. Verfahren nach Anspruch 1, wobei die Beschichtungszusammensetzung ferner ein internes Formtrennmittel umfasst.

5. Verfahren nach Anspruch 1, wobei das erste Kunststoffformteil (1) und das zweite Kunststoffformteil (6) eine oder mehrere Einbuchtungen (4, 9) umfassen.

6. Verfahren nach Anspruch 1, wobei die Außenfläche der Baugruppe einen oder mehrere Abschnitte, die nicht beschichtet sind, und einen oder mehrere andere Abschnitte, die beschichtet sind, umfasst.

7. Verfahren nach Anspruch 1, wobei das erste Kunststoffformteil (1) und das zweite Kunststoffformteil (6) ausschließlich durch die gehärtete Beschichtung und nicht durch andere Klebstoffe oder Strukturen zusammengehalten werden.

8. Verkapselung umfassend:
ein erstes Kunststoffformteil (1);
ein zweites Kunststoffformteil (6), wobei das erste Formteil (1) und das zweite Formteil (6) zusammenpassen, um eine Baugruppe mit einer Außenfläche zu bilden;
eine gehärtete Beschichtung, die auf der Außenfläche der Baugruppe angeordnet ist,
wobei die Beschichtung 360° um die Außenfläche der Baugruppe fließt, so dass, wenn die beschichtete Baugruppe 360° um eine Achse gedreht wird, die Beschichtung bei jedem Grad um die Achse als auf einen Abschnitt der Außenfläche der Baugruppe aufgebracht gesehen werden kann, wobei die Beschichtungszusammensetzung umfasst: (i) eine erste Polymerkomponente, die ein Polymer enthält, das isocyanatreaktive Gruppe(n) umfasst, und (ii) eine zweite Polymerkomponente, die ein Polyisocyanat enthält, wobei wenigstens eines von dem ersten Kunststoffformteil (1) und dem zweiten Kunststoffformteil (6) Polycarbonat umfasst und
wobei die Verkapselung keine anderen Klebstoffe oder Strukturen umfasst.

9. Verkapselung nach Anspruch 8, wobei die erste Polymerkomponente ein Polyetherpolyol oder ein Polycarbonatpolyol ist.

10. Verkapselung nach Anspruch 8, wobei die zweite Polymerkomponente eine ausgewählt aus der Gruppe bestehend aus einem Diisocyanat, Polyisocyanuraten und Biuretgruppen umfasst.

11. Verkapselung nach Anspruch 8, wobei die Beschichtungszusammensetzung ferner ein internes Formtrennmittel umfasst.

12. Verkapselung nach Anspruch 8, wobei das erste Kunststoffformteil (1) und das zweite Kunststoffformteil (6) eine oder mehrere Einbuchtungen (4, 9) umfassen.

13. Verkapselung nach Anspruch 8, wobei die Außenfläche der Baugruppe einen oder mehrere Abschnitte, die nicht beschichtet sind, und einen oder mehrere andere Abschnitte, die beschichtet sind, umfasst.

## Revendications

1. Procédé de revêtement dans le moule comprenant :
introduction d'une première pièce moulée de plastique (1) dans une cavité (37) d'un moule ;
introduction d'une deuxième pièce moulée de plastique (6) dans la cavité (37), où la première pièce moulée (1) et la deuxième pièce moulée (6) s'emboîtent pour former un assemblage ayant une surface extérieure ;
introduction d'une composition de revêtement dans la cavité (37) ; et
durcissement du revêtement sur la surface extérieure de l'assemblage,
dans lequel le revêtement s'écoule dans un interstice situé entre la surface extérieure de l'assemblage et la cavité (37), la composition de revêtement comprenant (i) un premier composant polymérique comprenant un polymère comprenant un ou plusieurs groupes réactifs avec un isocyanate et (ii) un deuxième composant polymérique comprenant un polyisocyanate, au moins l'un parmi la première pièce moulée de plastique (1) et la deuxième pièce moulée de plastique (6) comprenant un polycarbonate et
dans lequel le revêtement s'écoule 360° autour de la surface extérieure de l'assemblage, de sorte que lorsque l'assemblage revêtu est mis en rotation 360° autour d'un axe, le revêtement peut être vu tel qu'appliqué sur une partie de la surface extérieure de l'assemblage à un quelconque degré autour de cet axe.

2. Procédé selon la revendication 1, dans lequel le premier composant polymérique est un polyéther polyol ou un polycarbonate polyol.

3. Procédé selon la revendication 1, dans lequel le deuxième composant polymérique comprend un composant choisi dans le groupe constitué par un groupe diisocyanate, polyisocyanurates et biuret.

4. Procédé selon la revendication 1, dans lequel la composition de revêtement comprend en outre un agent de démoulage interne.

5. Procédé selon la revendication 1, dans lequel la première pièce moulée de plastique (1) et la deuxième pièce moulée de plastique (6) comprennent une ou plusieurs encoches (4, 9).

6. Procédé selon la revendication 1, dans lequel la surface extérieure de l'assemblage comprend une ou plusieurs parties qui ne sont pas revêtues et une ou plusieurs autres parties qui sont revêtues.

7. Procédé selon la revendication 1, dans lequel la première pièce moulée de plastique (1) et la deuxième pièce moulée de plastique (6) sont maintenues ensemble uniquement par le revêtement durci, et non par de quelconques autres adhésifs ou structures.

8. Encapsulation comprenant :
une première pièce moulée de plastique (1) ;
une deuxième pièce moulée de plastique (6), la première pièce moulée (1) et la deuxième pièce moulée (6) s'emboîtant ensemble pour former un assemblage ayant une surface extérieure ;
un revêtement durci situé sur la surface extérieure de l'assemblage,
dans laquelle le revêtement s'écoule 360° autour de la surface extérieure de l'assemblage, de sorte que lorsque l'assemblage revêtu est mis en rotation 360° autour d'un axe, le revêtement peut être vu comme appliqué sur une partie de la surface extérieure de l'assemblage à un quelconque degré autour de cet axe, la composition de revêtement comprenant (i) un premier composant polymérique comprenant un polymère comprenant un ou plusieurs groupes réactifs avec un isocyanate et (ii) un deuxième composant polymérique comprenant un polyisocyanate, dans laquelle au moins l'une parmi la première pièce moulée de plastique (1) et la deuxième pièce moulée de plastique (6) comprend un polycarbonate et
dans laquelle l'encapsulation ne comprend pas de quelconques autres adhésifs ou structure.

9. Encapsulation selon la revendication 8, dans laquelle le premier composant polymérique est un polyéther polyol ou un polycarbonate polyol.

10. Encapsulation selon la revendication 8, dans laquelle le deuxième composant polymérique comprend l'un choisi dans le groupe constitué par un groupe diisocyanate, polyisocyanurates et biuret.

11. Encapsulation selon la revendication 8, dans laquelle la composition de revêtement comprend en outre un agent de démoulage interne.

12. Encapsulation selon la revendication 8, dans laquelle la première partie moulée de plastique (1) et la deuxième partie moulée de plastique (6) comprennent une ou plusieurs encoches (4, 9).

13. Encapsulation selon la revendication 8, dans laquelle la surface extérieure de l'assemblage comprend une ou plusieurs parties qui ne sont pas revêtues et une ou plusieurs autres parties qui sont revêtues.
